(19) Europäisches Patentamt / European Patent Office / Office européen des brevets

(11) **EP 3 475 105 B1**

(12) **FASCICULE DE BREVET EUROPEEN**

(45) Date de publication et mention de la délivrance du brevet:
**04.01.2023 Bulletin 2023/01**

(21) Numéro de dépôt: **17745390.9**

(22) Date de dépôt: **23.06.2017**

(51) Classification Internationale des Brevets (IPC):
***B60C 11/24*** *(2006.01)*

(52) Classification Coopérative des Brevets (CPC):
**B60C 11/246; B60C 11/24**

(86) Numéro de dépôt international:
**PCT/FR2017/051678**

(87) Numéro de publication internationale:
**WO 2017/220945 (28.12.2017 Gazette 2017/52)**

(54) **PROCÉDÉ DE DÉTECTION D'UNE MODIFICATION DU RAYON DE ROULEMENT D'UN PNEUMATIQUE, ET SUIVI ASSOCIÉ**

VERFAHREN ZUR DETEKTION EINER VEÄNDERUNG DES REIFENROLLRADIUS UND NACHMASSNAHMEN

METHOD FOR DETECTING A MODIFICATION OF THE TIRE ROLLING RADIUS AND ASSOCIATED TRACKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2016 FR 1655869**

(43) Date de publication de la demande:
**01.05.2019 Bulletin 2019/18**

(73) Titulaire: **Compagnie Générale des Etablissements Michelin**
**63000 Clermont-Ferrand (FR)**

(72) Inventeurs:
• **CHARREYRON, Jacques**
**63040 Clermont-Ferrand Cedex 9 (FR)**
• **JOURNOIS, Martin**
**63040 Clermont-Ferrand Cedex 9 (FR)**
• **DE GIACOMONI, Jacques**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 172 759     US-A1- 2015 239 298**

**Description**

DOMAINE DE L'INVENTION

La présente invention se situe dans le domaine du suivi de l'état des pneumatiques de véhicule. De manière plus précise, la présente invention concerne un procédé de détection d'une modification du rayon de roulement d'un pneumatique, et un procédé de suivi de l'état du pneumatique, permettant de commander une action de maintenance.

De manière connue, la bande de roulement d'un bandage pneumatique, qu'il soit destiné à équiper un véhicule de tourisme, poids lourd, Génie Civil ou autre..., est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un bandage pneumatique est neuf, la bande de roulement est à sa hauteur maximale. Cette hauteur initiale peut varier en fonction du type de bandage pneumatique considéré ainsi que de l'usage auquel il est destiné ; à titre d'exemple, les bandages pneumatiques « hiver » ont généralement une profondeur de sculpture supérieure à celle de bandages pneumatiques « été ». Lorsque le bandage pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du bandage pneumatique, telle l'adhérence sur sol mouillé. De plus, les capacités d'évacuation d'eau diminuent fortement lorsque la profondeur des canaux des sculptures diminue. Il est donc souhaitable de pouvoir suivre l'évolution de l'usure de la bande de roulement d'un bandage pneumatique.

Un tel suivi est d'autant plus utile dans le cas de flottes de véhicule, où le gestionnaire de flottes ne peut pas suivre visuellement l'ensemble des véhicules, et a donc besoin d'un moyen lui permettant d'obtenir des informations quant à l'état des pneumatiques de l'ensemble de sa flotte, et des nécessités de maintenance.

Plusieurs systèmes permettant un tel suivi ont été décrits par le passé, ces systèmes étant par exemple basés sur l'utilisation de dispositifs externes effectuant des mesures d'usure et transmettant de telles mesures à un serveur distant accessible par un gestionnaire de flottes. Toutefois, ces systèmes nécessitent le passage des véhicules en un lieu précis, ce qui n'est pas toujours possible.

On connaît également, de la demande US2015/0239298, un système permettant de remédier à cet inconvénient. En effet, ce document décrit un procédé de détermination de l'usure d'un pneumatique en cours d'usage. Ce procédé se base sur la détermination d'un rayon de roulement et sur la détermination d'un profil d'usure en fonction de l'évolution de ce rayon de roulement. Toutefois, on a constaté que cette méthode ne permettait pas de fournir une information suffisamment fiable.

Par conséquent, la présente invention vise à fournir un procédé de détermination de l'état d'usure d'un pneumatique visant à remédier aux inconvénients précités.

BREVE DESCRIPTION DE L'INVENTION

Ainsi, l'invention concerne un procédé de détermination d'une modification d'un rayon de roulement d'un pneumatique installé sur un véhicule, le procédé comprenant les étapes suivantes :

- On obtient un premier signal représentant une vitesse réelle du véhicule sur une première période de temps,

- On obtient un second signal représentant une vitesse de rotation de la roue du véhicule portant le pneumatique sur la même période de temps,

- On effectue une sélection et un traitement parmi les données constituant le premier et le second signal de manière à les rendre comparables,

- Après sélection et traitement des données, on calcule le ratio du premier signal et du second signal sous forme d'une série de données,

- On détermine une ensemble d'indicateurs statistiques représentatifs de cette série de données, et

- En fonction de ces indicateurs statistiques, on détermine d'une modification d'un rayon de roulement d'un pneumatique.

Un tel procédé peut être mis en œuvre sur tous types de véhicule, notamment compris dans le groupe comprenant : des véhicules de tourisme, des poids lourds, des véhicules de génie civil, ou bien encore des véhicules agricoles.

La modification du rayon de roulement peut être due à plusieurs paramètres, tels que l'usure du pneumatique, une modification de la pression du pneumatique, ou encore une modification de la charge du pneumatique.

La relation entre l'usure d'un pneumatique et le rayon de roulement dudit pneumatique sera particulièrement valable pour des pneumatiques présentant des sculptures profondes par rapport à leur rayon de roulement, puisque l'usure d'un pneumatique se caractérise par une diminution de la hauteur de gomme des sculptures. Ainsi, sur le tableau ci-après, on constate qu'un procédé selon l'invention sera particulièrement avantageux pour des véhicules de type Agricole ou Génie Civil équipés de pneumatiques présentant des rayons de pneus typiques dont des exemples sont montrés dans le tableau ci-après :

| Type de pneu | Rayon pneu Typique | Hauteur de gomme moyenne à user | Rapport hauteur de gomme / rayon |
|---|---|---|---|
| PL | 500 | 12 | 2.4 % |
| TC | 300 | 7 | 2.3 % |
| GC | 1500 | 100 | 6.7 % |
| AV | 600 | 11 | 1.8% |
| AG | 600 | 60 | 10% |

Dans un mode de réalisation préférentiel, l'étape d'obtention d'un premier signal représentant une vitesse réelle du véhicule est effectuée en obtenant des données géolocalisées du véhicule, par exemple par le biais d'un système de type GPS, ou en obtenant des données issues d'un accéléromètre installé sur le véhicule.

Dans un autre mode de réalisation préférentiel, l'étape d'obtention d'un second signal représentant une vitesse de rotation théorique de la roue est effectuée en lisant des données circulant sur un bus CAN du véhicule ou les données issues d'une accéléromètre installé dans le pneumatique ou dans la roue portant le pneumatique..

Dans un autre mode de réalisation, les indicateurs statistiques calculés sur la série de données sont compris dans le groupe comprenant : le nombre de points, le minimum, le maximum, la moyenne, l'écart-type, la médiane et les quartiles. Le choix des indicateurs statistiques dépend du type de véhicule, mais également du mode de mise en œuvre d'un procédé selon l'invention. En effet, un tel procédé peut être mis en œuvre soit de manière embarquée, c'est-à-dire en utilisant des systèmes présents sur un véhicule, soit de manière débarquée.

Dans le cas d'une mise en œuvre embarquée, on utilisera préférentiellement la moyenne plutôt que la médiane, puisqu'elle nécessite moins de puissance de calcul. L'écart-type permet d'obtenir une information quant à la précision de la méthode. Le minimum et le maximum permettent, eux, de faire apparaître des points aberrants, et éventuellement de ne pas les prendre en compte.

Dans un mode de réalisation, l'étape de sélection et de traitement des données comprend une étape de lissage des signaux par un noyau de filtrage, par exemple de type gaussien, uniforme, quadratique ou exponentiel. Un tel choix pour effectuer l'étape de lissage permet de minimiser la complexité de l'invention, et donc de permettre sa mise en œuvre dans un véhicule.

Dans un autre mode de réalisation, l'étape de sélection et de traitement des données comprend une étape d'élimination des données représentant une vitesse inférieure à un seuil prédéterminé, par exemple fixé à 50 km/h. Ce seuil est préférentiellement adapté au type de véhicule sur lequel un procédé selon l'invention est mis en œuvre. En effet, dans le cas d'un véhicule génie civil dont la plage de vitesse est de l'ordre de 0-60km/h, la fixation d'un seuil à 50km/h pourrait rendre un procédé selon l'invention inopérant. Dans ce cas, on fixera un seuil plus faible. Ce seuil plus faible ne représente pas un problème pour un procédé selon l'invention, puisque les véhicules de type génie civil effectuent des longs trajets à des vitesses stabilisées, ce qui permet d'obtenir des signaux exploitables.

Dans un autre mode de réalisation, l'étape de sélection et de traitement des données comprend une étape de dérivation d'un signal. Dans ce cas, le procédé comprend avantageusement une étape d'élimination des données du signal dérivé représentant une accélération inférieure, en valeur absolue, à un seuil prédéterminé, par exemple $0.05 \, m.s^{-2}$.

Ce mode de réalisation utilisant l'accélération est particulièrement avantageux pour une application d'un procédé selon l'invention à des véhicules de type tourisme ; En effet, ces véhicules présentent parfois des signaux de vitesse à fortes variations, et l'utilisation de l'accélération permet d'obtenir des signaux stabilisés. Toutefois, on a constaté qu'une forte accélération pouvait conduire à des modifications du rayon de roulement. Pour compenser cet effet, dans un exemple de réalisation on calcule un paramètre de rigidité du pneumatique.

Un autre aspect de l'invention concerne un procédé de suivi de l'état d'un pneumatique, comprenant les étapes suivantes

- On met en œuvre un procédé selon l'une des revendications précédentes plusieurs fois,

- On stocke, dans une mémoire, les indicateurs statistiques des séries de données,

- On détermine l'évolution de ces indicateurs statistiques, et

- En fonction de cette évolution, on détermine un besoin de maintenance du pneumatique.

Les besoins de maintenance du pneumatique peuvent être de diverse nature. Ainsi, on peut penser à des applications

- La détection de fin de vie, qui peut nécessiter un remplacement du pneumatique,

- La détection d'une perte de pression, qui peut nécessiter une action de gonflage du pneumatique,

- La détection d'un état d'usure différent entre plusieurs pneumatiques d'un même véhicule, qui peut nécessiter une permutation des pneus entre eux.

Ces différentes applications nécessitent la mise en œuvre d'un procédé sur de longues périodes, allant de quelques semaines à plusieurs mois. Une telle durée permet de négliger certains paramètres tels que la charge portée par le véhicule, car l'effet de cette charge est lissé dans la durée. Cela permet ainsi une mise en œuvre fiable d'un procédé selon l'invention dans des véhicules de type poids lourd, qui présente des variations de charge importantes.
Dans le cas d'un pneumatique génie civil, un procédé selon l'invention est particulièrement adapté, puisque la hauteur de gomme de la bande de roulement d'un pneumatique est très importante, et la variation du rayon de roulement est donc très marquée. En outre, sur ce type de véhicule, la pression des pneumatiques est contrôlée de manière précise et régulière, et n'influe donc pas sur le rayon de roulement.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- la figure 1 montre un schéma fonctionnel d'un procédé de détermination d'une modification de rayon de roulement selon l'invention, et

- les figures 2a et 2b montrent des exemples de signaux GPS et CAN obtenus lors de la mise en œuvre d'un procédé de détermination d'une modification de rayon de roulement selon l'invention.

- La figure 3 montre une répartition des données statistiques obtenues dans le cadre de la mise en œuvre d'un procédé de suivi de l'état d'un pneumatique selon l'invention.

DESCRIPTION DU MEILLEUR MODE DE REALISATION DE L'INVENTION

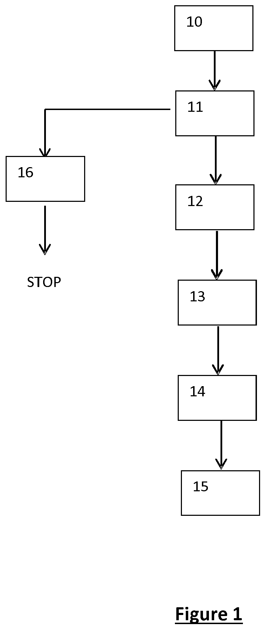

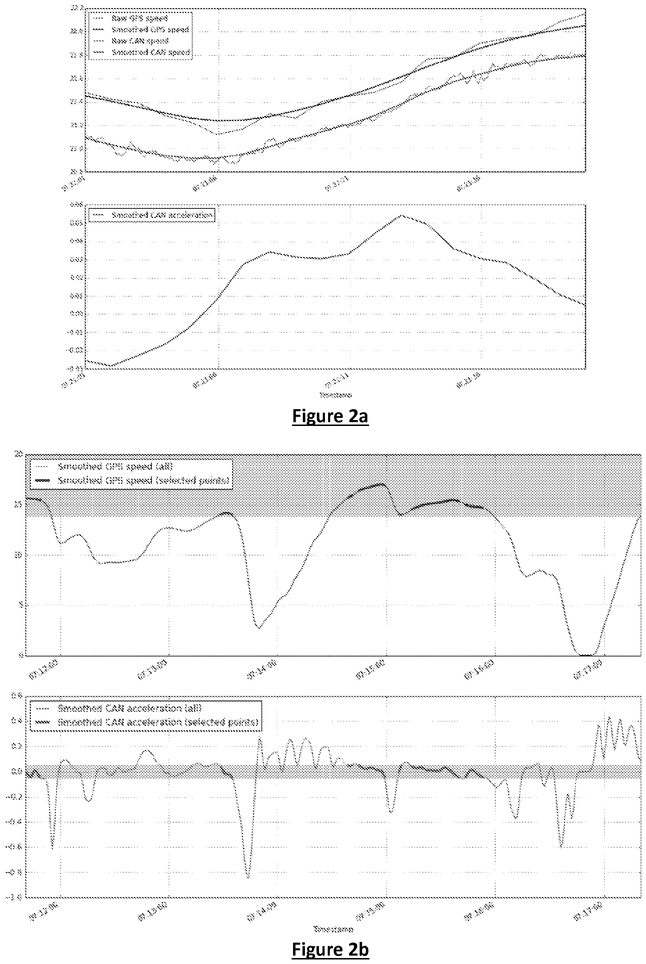

On va maintenant décrire, à l'aide de la figure 1 et des figures 2a et 2b, les différentes étapes d'un procédé de détermination d'une modification de rayon de roulement selon l'invention.
Au bloc 1, on détermine un premier signal représentant la vitesse réelle du véhicule, par exemple par le biais du GPS, et un second signal représentant la vitesse théorique des roues, par exemple en lisant des données sur le bus CAN. On précise ici que selon les constructeurs, les informations disponibles sur le bus CAN diffèrent ; ainsi, il n'est parfois par possible d'obtenir une vitesse individuelle de roue, mais seulement une vitesse d'essieu. Dans ce cas, un procédé selon l'invention permettra d'obtenir des informations sur l'ensemble des pneumatiques montés sur cet essieu, sans pouvoir distinguer pneu par pneu.
Une fois ces données obtenues, on effectue une étape d'extraction des données pertinentes, au bloc 11. Cette extraction consiste tout d'abord à sélectionner les données du premier signal sur une période de temps prédéterminée. Dans le cas où le signal comporte un nombre insuffisant de points sur cette période, un procédé selon l'invention est alors interrompu (bloc 15). Dans un exemple, on choisira une période de temps égale à une minute, et on déterminera que le nombre minimum de points est 50, ce qui représente une moyenne de 0.8 points par seconde.
On sélectionne ensuite les données du second signal sur la même période de temps. Si le signal CAN ne comprend aucun point, alors un procédé selon l'invention est interrompu (bloc 15).

Une fois les données extraites, on effectue un lissage des signaux par un noyau gaussien. On filtre tout d'abord, au bloc 12, le signal GPS sous la forme suivante :
A chaque instant $t_i$ du signal de vitesse GPS ($i = 1 \cdots n$),, on calcule la valeur lissée comme une moyenne des autres points:

$$\hat{v}_{GPS}(t_i) = \frac{\sum_{j=1}^{n} K(t_i - t_j) \cdot v_{GPS}(t_j)}{\sum_{j=1}^{n} K(t_i - t_j)} \, ,$$

Où

$$K(dt) = e^{-\frac{dt^2}{\omega^2}} \, .$$

Sous forme matricielle, on peut simplement écrire:

$$\hat{v}_{GPS} = \frac{K_{GPS} \cdot v_{GPS}}{K_{GPS} \cdot 1} \, ,$$

où

$$K_{GPS}$$

est la matrice définie par

$$k_{i,j} = K(t_i - t_j)$$

On lisse ensuite le signal CAN par une méthode similaire au signal GPS, en changeant le paramètre d'échelle du filtre, et on le rééchantillonne sur l'échelle de temps du signal GPS, afin d'obtenir des données comparables. En effet, un signal GPS est généralement à une fréquence de 1 Hz, alors qu'un signal CAN est généralement à une fréquence située entre 50 et 100 Hz.
Ainsi, si on note $\tilde{t}_1, \cdots, \tilde{m}$ les instants du signal CAN, on calcule pour tout instant $t_i$ du signal GPS:

$$\hat{v}_{CAN}(t_i) = \frac{\sum_{j=1}^{m} K(t_i - \tilde{t}_j) \cdot v_{GPS}(\tilde{t}_j)}{\sum_{j=1}^{n} K(t_i - \tilde{t}_j)} = \frac{K_{CAN} \cdot v_{CAN}}{K_{CAN} \cdot 1} \, ,$$

Où $K_{CAN}$ est cette fois une matrice rectangulaire (n x m) définie par

$$k_{i,j} = K(t_i - \tilde{t}_j).$$

En outre, on effectue également une dérivée du signal CAN, afin d'obtenir un signal représentatif de l'accélération des roues.

$$\hat{v}'_{CAN}(t_i) = \frac{\partial}{\partial t_i}\left(\frac{K_{CAN} \cdot v_{CAN}}{K_{CAN} \cdot 1}\right) = \frac{(K'_{CAN} \cdot v_{CAN})(K_{CAN} \cdot 1) - (K_{CAN} \cdot v_{CAN})(K'_{CAN} \cdot 1)}{(K_{CAN} \cdot 1)^2} \, ,$$

où $K'_{CAN}$ est la matrice dérivée définie par

$$k_{i,j} = K'(t_i - \bar{t}_j).$$

La figure 2a montre les signaux CAN et GPS avant et après cette étape de lissage. Ainsi, le cadre supérieur montre quatre courbes. Les deux courbes du haut représentent la vitesse GPS brute et la vitesse GPS lissée, et les deux autres courbes représentent la vitesse CAN brute et la vitesse CAN lissée. Le cadre inférieure représente l'accélération CAN lissée

Une fois les signaux lissés on effectue, au bloc 14, un filtrage des signaux. Pour ce faire, on sélectionne les instants pour lesquels la vitesse GPS est supérieure à un seuil de vitesse prédéterminé, et les instants pour lesquels l'accélération dérivée de la vitesse CAN est inférieure, en valeur absolue, à un seuil prédéterminé.

Cette étape de filtrage apparaît sur la figure 2b. Ainsi, le cadre supérieure montre un exemple de vitesse GPS lissée et, parmi l'ensemble des points formant ce signal, seuls ceux situés au-dessus de 13,88 m.s$^{-1}$, c'est-à-dire ceux situés dans la zone grisée, sont sélectionnées.

De la même façon, le cadre inférieur montre un exemple d'accélération CAN lissée et, parmi l'ensemble des points formant ce signal, seuls ceux situés, en valeur absolue, en-dessous de 0505 m.s$^{-2}$, c'est-à-dire ceux situés dans la zone grisée, sont sélectionnées.

Ensuite, au bloc 15, on calcule le ratio

$$\frac{\hat{v}_{GPS}(t_i)}{\hat{v}_{CAN}(t_i)}$$

pour l'ensemble des points restants, et on résume alors cette série de données par plusieurs indicateurs statistiques déjà mentionnés dans la présente demande.

Ces indicateurs statistiques peuvent alors être utilisés directement ou bien stockés dans une mémoire pour une utilisation sur une longue durée telle que précédemment décrite. Dans ce cas, une sélection sera effectuée, parmi l'ensemble des ratios stockés, pour déterminer lesquels seront utilisés dans l'évaluation de l'état du pneumatique. Ainsi, on pourra décider que seuls les ratios portant sur un nombre de points supérieur à un seuil déterminé, par exemple 5, seront retenus, ceci afin de ne garder que les ratios les plus représentatifs.

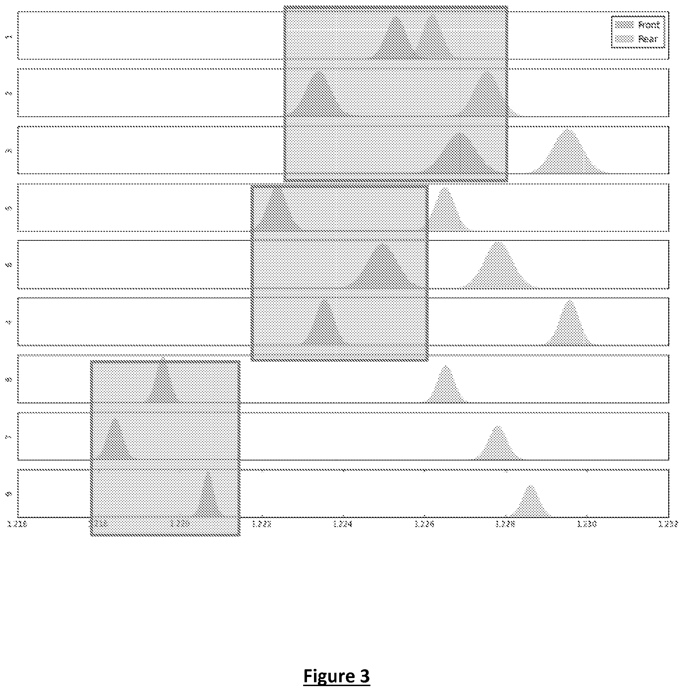

La figure 3 montre un exemple de répartition de ces données statistiques. Ainsi sur cette figure, les neuf diagrammes représentent, respectivement le ratio Vitesse réelle /Vitesse théorique, pour des pneumatiques comme suit :

| N° | Usure | Charge | Pression |
|---|---|---|---|
| 1 | Neuf | +++ | ++ |
| 2 | Neuf | ++ | + |
| 3 | Neuf | + | ++ |
| 4 | Moyen | +++ | + |
| 5 | Moyen | ++ | ++ |
| 6 | Moyen | + | + |
| 7 | Usé | +++ | ++ |
| 8 | Usé | ++ | + |
| 9 | Usé | + | ++ |

On voit alors apparaître des « groupes » de distribution, symbolisés par les trois cadres tracés sur ces courbes. On constate alors deux choses :

- La première est que la charge et la pression ont une influence négligeable sur le positionnement des distributions, puisqu'ils ne masquent pas l'effet de l'usure,

- La seconde est que l'on distingue clairement les pneumatiques en fonction de leur état d'usure, puisque le premier cadre regroupe les pneumatiques neufs ou quasi-neufs, le second cadre regroupe les pneumatiques moyennement usés, et le troisième cadre regroupe les pneumatiques usés.

**Revendications**

1. Procédé de détermination d'une modification d'un rayon de roulement d'un pneumatique installé sur un véhicule, le procédé comprenant les étapes suivantes :

   • On obtient un premier signal représentant une vitesse réelle du véhicule sur une première période de temps
   • On obtient un second signal représentant une vitesse de rotation de la roue du véhicule portant le pneumatique sur la même période de temps,
   • On effectue une sélection et un traitement parmi les données constituant le premier et le second signal de manière à les rendre comparables, l'étape de sélection et de traitement des données comprend une étape d'élimination des données représentant une vitesse supérieure à un seuil prédéterminé, une étape de dérivation d'un signal et une étape d'élimination des données du signal dérivé représentant une accélération inférieure, en valeur absolue, à un seuil prédéterminé.
   • Après sélection et traitement des données, on calcule le ratio du premier signal et du second signal sous forme d'une série de données,
   • On détermine un ensemble d'indicateurs statistiques représentatifs de cette série de données, et
   • En fonction de ces indicateurs statistiques, on détermine une modification du rayon de roulement du pneumatique.

2. Procédé selon la revendication 1, dans lequel l'étape d'obtention d'un premier signal représentant une vitesse réelle du véhicule est effectuée en obtenant des données géolocalisées du véhicule, par exemple par le biais d'un système de type GPS, ou en obtenant des données issues d'un accéléromètre installé sur le véhicule.

3. Procédé selon la revendication 1 ou 2, dans lequel l'étape d'obtention d'un second signal représentant une vitesse de rotation de la roue est effectuée en lisant des données circulant sur un bus CAN du véhicule ou les données issues d'un accéléromètre installé dans le pneumatique ou dans la roue portant le pneumatique.

4. Procédé selon l'une des revendications précédentes, dans lequel les indicateurs statistiques calculés sur la série de données sont compris dans le groupe comprenant : le nombre de points, le minimum, le maximum, la moyenne, l'écart-type, la médiane et les quartiles.

5. Procédé selon l'une des revendications précédentes, dans lequel l'étape de sélection et de traitement des données comprend une étape de lissage des signaux par un noyau de filtrage.

6. Procédé selon l'une des revendications précédentes, dans lequel le seuil est égal à 50 km/h.

7. Procédé selon l'une des revendications précédentes, dans lequel le seuil prédéterminé est égal à 0.05 m.s$^{-2}$.

8. Procédé de suivi de l'état d'un pneumatique, comprenant les étapes suivantes :

   - On met en œuvre un procédé selon l'une des revendications précédentes plusieurs fois,
   - On stocke, dans une mémoire, les indicateurs statistiques des séries de données,
   - On détermine l'évolution de ces indicateurs statistiques, et
   - On fonction de cette évolution, on détermine un besoin de maintenance du pneumatique.

**Patentansprüche**

1. Verfahren zum Bestimmen einer Änderung eines Rollradius eines Reifens, der an einem Fahrzeug angebracht ist, wobei das Verfahren die folgenden Schritte umfasst:

   • Man erhält ein erstes Signal, das eine Ist-Geschwindigkeit des Fahrzeugs über einen ersten Zeitraum repräsentiert,

• man erhält ein zweites Signal, das eine Drehzahl des Rades des Fahrzeugs, das den Reifen trägt, über denselben Zeitraum repräsentiert,

• man führt eine Auswahl und eine Verarbeitung unter den Daten, aus denen das erste und das zweite Signal bestehen, durch, so dass sie vergleichbar gemacht werden, wobei der Schritt des Auswählens und Verarbeitens der Daten einen Schritt des Eliminierens der Daten, die eine über einem vorbestimmten Schwellenwert liegende Geschwindigkeit repräsentieren, einen Schritt des Ableitens eines Signals und einen Schritt des Eliminierens der Daten des abgeleiteten Signals, die eine als absoluter Wert unter einem vorbestimmten Schwellenwert liegende Beschleunigung repräsentieren, umfasst,

• nach dem Auswählen und Verarbeiten der Daten berechnet man den Quotienten aus dem ersten Signal und dem zweiten Signal in Form einer Datenreihe,

• man bestimmt eine Menge von statistischen Indikatoren, die für diese Datenreihe repräsentativ sind, und

• man bestimmt in Abhängigkeit von diesen statistischen Indikatoren eine Änderung des Rollradius des Reifens.

**2.** Verfahren nach Anspruch 1, bei dem der Schritt des Erhaltens eines ersten Signals, das die Ist-Geschwindigkeit des Fahrzeugs repräsentiert, durchgeführt wird, indem geolokalisierte Daten des Fahrzeugs erhalten werden, zum Beispiel über ein System vom Typ GPS, oder indem Daten, die aus einem am Fahrzeug angebrachten Beschleunigungsmesser stammen, erhalten werden.

**3.** Verfahren nach Anspruch 1 oder 2, bei dem der Schritt des Erhaltens eines zweiten Signals, das eine Drehzahl des Rades repräsentiert, durchgeführt wird, indem über einen CAN-Bus des Fahrzeugs fließende Daten oder Daten, die aus einem im Reifen oder in dem den Reifen tragenden Rad angebrachten Beschleunigungsmesser stammen, gelesen werden.

**4.** Verfahren nach einem der vorhergehenden Ansprüche, bei dem die über die Datenreihe berechneten statistischen Indikatoren in der Gruppe inbegriffen sind, die umfasst: die Anzahl von Punkten, das Minimum, das Maximum, den Mittelwert, die Standardabweichung, den Median und die Quartile.

**5.** Verfahren nach einem der vorhergehenden Ansprüche, bei dem der Schritt des Auswählens und Verarbeitens der Daten einen Schritt des Glättens der Daten durch einen Filterkern umfasst.

**6.** Verfahren nach einem der vorhergehenden Ansprüche, bei dem der Schwellenwert 50 km/h beträgt.

**7.** Verfahren nach einem der vorhergehenden Ansprüche, bei dem der vorbestimmte Schwellenwert $0,05 \text{ m.s}^{-2}$ beträgt.

**8.** Verfahren zum Nachverfolgen des Zustands eines Reifens, umfassend die folgenden Schritte:

- Man setzt ein Verfahren nach einem der vorhergehenden Ansprüche mehrmals ein,
- man speichert, in einem Speicher, die statistischen Indikatoren der Datenreihen,
- man bestimmt den Verlauf dieser statistischen Indikatoren und
- man bestimmt in Abhängigkeit von diesem Verlauf einen Wartungsbedarf des Reifens.

**Claims**

**1.** Method for determining a change in a rolling radius of a tyre fitted on a vehicle, the method comprising the following steps:

• A first signal representing an actual speed of the vehicle is obtained for a first period of time,

• A second signal representing a speed of rotation of the vehicle wheel bearing the tyre is obtained for the same period of time,

• The data constituting the first and the second signal are selected and processed so as to make them comparable, wherein the step of selecting and processing the data comprising:

◦ a step of eliminating the data representing a speed greater than a predetermined threshold,

◦ a step of deriving a signal, and

◦ a step of eliminating the data of the derived signal representing an acceleration less, in absolute terms, than a predetermined threshold,

• After the data have been selected and processed, the ratio of the first signal and the second signal is calculated in the form of a set of data,
• A set of statistical indicators representative of this set of data is determined, and
• Depending on these statistical indicators, a change in the rolling radius of the tyre is determined.

2. Method according to Claim 1, wherein the step of obtaining a first signal representing an actual speed of the vehicle is carried out by obtaining geolocation data of the vehicle, for example via a GPS-type system, or by obtaining data output by an accelerometer installed on the vehicle.

3. Method according to Claim 1 or 2, wherein the step of obtaining a second signal representing a speed of rotation of the wheel is carried out by reading the data transmitted on a CAN bus of the vehicle or the data output by an accelerometer installed in the tyre or in the wheel bearing the tyre.

4. Method according to one of the preceding claims, wherein the statistical indicators calculated over the set of data are contained in the group comprising: the number of points, the minimum, the maximum, the average, the standard deviation, the median and the quartiles.

5. Method according to one of the preceding claims, wherein the step of selecting and processing the data comprises a step of smoothing the signals by way of a filter kernel.

6. Method according to one of the preceding claims, wherein the threshold is equal to 50 km/h.

7. Method according to one of the preceding claims, wherein the threshold is equal to $0.05 \text{ m.s}^2$.

8. Method for monitoring the state of a tyre, comprising the following steps:

- A method according to one of the preceding claims is implemented several times,
- The statistical indicators of the sets of data are saved in a memory,
- The development of these statistical indicators is determined, and
- Depending on this development, a need for tyre maintenance is determined.

**Figure 1**

**Figure 2a**

**Figure 2b**

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150239298 A